# EUROPEAN PATENT APPLICATION

(11) **EP 0 684 149 A1**
(43) Date of publication of application: **29.11.1995**
(21) Application number: 95850093.6
(22) Date of filing: 16.05.1995
(51) Int. Cl.: B60B 7/08

(54) **Wheel disc for a vehicle wheel**

(30) Priority: 19.05.1994 SE 9401733
(71) Applicant: UNITED WHEELCOVERS AKTIEBOLAG, S-272 24 Simrishamn (SE)
(72) Inventor: Arvidsson, Krister Erik Gustav, S-270 11 Abbekas (SE)
(74) Representative: Erixon, Bo

(57) **Abstract**

The present invention relates to a wheel disc that consists of a plastic cap (10) made in one piece, said cap having a peripheral edge portion (13) intended to abut a rim (17). The edge portion has at least one recess (18) that is provided with a resilient means (19) intended to urge the parts of the edge portion, located on both sides of the recess, in a direction away from each other.

## Description

The present invention relates to a wheel disc for a vehicle wheel.

Wheel discs are previously known and generally used to make the appearance of wheel rims to look more beautiful and to a certain extent protect the wheel bolts against dirtying. In order to secure the wheel disc upon the rim there are a number of more or less complicated fastening systems. In a simple system that previously was used for wheel discs of metal, said wheel disc constitutes of a plate-shaped part having a conical edge portion that is pushed into recesses provided in the rim, the resilient characteristics of the metal brings about the necessary flexibility without persistent, permanent deformations when the wheel disc is mounted upon or released from the rim. However, said wheel discs of metal were relatively expensive and they have in recent years been replaced by wheel discs of plastic. Since the characteristics of plastic material differs from those of metal it is not possible to directly transfer the securing systems previously used for wheel discs of metal to wheel discs of plastic.

Thus it is not possible to use wheel discs of plastic in connection with the securing system described above since if such a wheel disc is subjected to compression the wheel disc will aquire a persistent deformation having the consequence that during driving there is a risk that the wheel disc will get loose from the rim.

Instead wheel discs of plastic have been developed that are provided with spring elements in the shape of tongues that project perpendicular to the plane of the wheel disc, the outer ends of the tongues carrying a resilient metal ring that is clamped against the rim beads. In order to provide a more compact system it has also been proposed to design the spring elements as parts of a cylindrical flange, see SE 9302130.

Although these wheel discs mainly consist of plastic they are relatively expensive to manufacture due to the fact that they have a complicated design, relatively large thickness of material and a spring element that is manufactured by a special method.

The present invention has the aim of presenting an inexpensive wheel disc of plastic, said wheel disc having uncomplicated design and is consequently easy to manufacture as well as secured to the rim in a simple way without running the risk of the wheel disc getting loose. This is achieved by a device that has been given the characteristics of the appending claims.

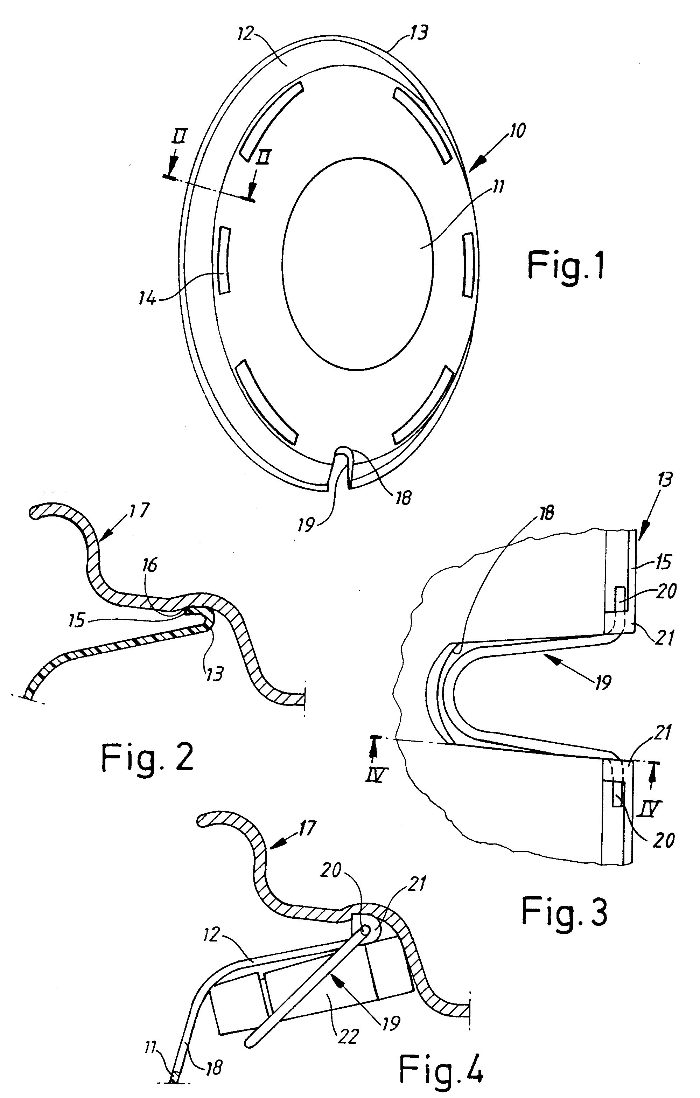

An embodiment of the invention will be described, reference being made to the enclosed drawing where fig 1 shows a perspective view of a wheel disc according to the invention in unmounted position; fig 2 shows a section along II-II in fig 1 where the wheel disc is mounted upon a rim, fig 3 shows a part of the edge portion of the wheel disc, seen from its outside, the wheel disc being unmounted while fig 4 shows a section along IV-IV in fig 3, the wheel disc being mounted upon the rim.

As can be learnt from the figures the wheel disc consists of a plate-shaped cap 10 having a central portion 11 that, via an essentially cylindrical or conical part 12, is transformed into a peripherial edge portion 13. The cap is made out of plastic and is manufactured in one piece, e.g. by injection moulding, said cap being provided with one or more decorating openings 14.

The edge portion 13 is J-shaped and has an outer free end 15 that is intended to abut a recess 16 in a rim 17 and to be retained in said recess 16. Preferably the edge portion 13 is provided with one or more recesses 18 having a resilient means 19. The resilient means consists of a metal yoke bent to substantially U-shape, said yoke having outwardly bent leg ends 20. Said leg ends 20 are intoduced into openings in beads 21 provided in the edge portion 13 on both sides of the recess 18. The wheel disc is preferably so arranged upon the rim 17 that the recess 18 is right in front of the air-relief valve 22 that is located on the outside of the rim, said recess having such a dimension that the air-relief valve is accessible without removal of the wheel disc.

Mounting of the wheel disc upon the rim is carried out by pushing the wheel disc 10 against the rim whereby the outer free end 15 of the edge portion enters the recess 16 of the rim simultaneously as the edge portion 13 compresses the recess 18 causing the resilient means 19 initially to be compressed and then again allowed to expand to secure the wheel disc upon the rim. Due to the fact that the resilient means urges the parts of the edge portion, located on both side of the recess, in a direction away from each other the wheel disc will thus be secured upon the rim.

With regard to the fact that the wheel disc according to the present invention primarily is intended to constitute an inexpensive piece it is consequently preferable to produce it of an inexpensive plastic material, said piece having a small thickness of material and as few details as possible.

## Claims

1. Wheel disc,
**characterized** in that it consists of a plastic cap (10) made in one piece, said cap having a peripheral edge portion (13) intended to abut a rim (17), said edge portion having at least one recess (18) that is provided with a resilient means (19) intended to urge the parts of the edge portion, located on both sides of the recess, in a direction away from each other.

2. Wheel disc according to claim 1,
**characterized** in that it is provided with one single recess (18) having such a dimension that it can be arranged to surround an air-relief valve (22) provided upon the rim (17).

3. Wheel disc according to claim 1 or 2,
**characterized** in that the resilient means (19) constitutes of a substantially U-shaped yoke having its leg ends (20) bent outwards and introduced into openings in the edge portion (13).

4. Wheel disc according to any of the previous claims,
**characterized** in that the edge portion (13) is J-shaped, seen in a radial section of the disc.

5. Wheel disc according to any of the previous claims,
**characterized** in that the edge portion (13) on both sides of the recess (18) is designed as a bead (21).
